# EUROPÄISCHE PATENTSCHRIFT

(11) **EP 0 707 194 B1**
(45) Veröffentlichungstag und Bekanntmachung des Hinweises auf die Patenterteilung: **19.05.1999**
(21) Anmeldenummer: 95115835.1
(22) Anmeldetag: 07.10.1995
(51) Int. Cl.: G01C 21/00, G05D 1/06, G01C 5/00

(54) **Verfahren zur Flugweggenerierung**
Flight path generating method
Méthode pour générer un trajectoire de vol

(30) Priorität: 12.10.1994 DE 4436356
(43) Veröffentlichungstag der Anmeldung: 17.04.1996
(73) Patentinhaber: DaimlerChrysler Aerospace Airbus Gesellschaft mit beschränkter Haftung, 21129 Hamburg (DE)
(72) Erfinder: Kricke, Klaus-Dieter, Dr., D-25421 Pinneberg (DE); Schäfer, Dirk, D-21149 Hamburg (DE)
(74) Vertreter: Hansmann, Dierk, Dipl.-Ing.

(56) Entgegenhaltungen:
- IEEE NATIONAL AEROSPACE AND ELECTRONICS, DAYTON, MAY 23 - 27, 1988, Bd. VOL. 2 OF 4, Nr. 1988, 23.Mai 1988 INSTITUTE OF ELECTRICAL AND ELECTRONICS ENGINEERS, Seiten 540-545, XP 000013463 WEIMANN ET AL. 'TERRAIN MASKING AND THREAT AVOIDANCE USING LAND MASS DATA'
- JOURNAL OF GUIDANCE AND CONTROL AND DYNAMICS, Bd. 14, Nr. 4, 1.Juli 1991 Seiten 807-813, XP 000320760 MENON P K A ET AL 'OPTIMAL TRAJECTORY SYNTHESIS FOR TERRAIN-FOLLOWING FLIGHT'
- IEEE TRANSACTIONS ON ROBOTICS AND AUTOMATION, Bd. 6, Nr. 2, 1.April 1990 Seiten 252-257, XP 000170539 CHENG V H L 'CONCEPT DEVELOPMENT OF AUTOMATIC GUIDANCE FOR ROTORCRAFT OBSTACLE AVOIDANCE'

## Beschreibung

Die Erfindung betrifft ein Verfahren zur interaktiven Generierung eines bodennahen Flugweges in Abhängigkeit von einer Geländeprofilierung durch Auswertung digital abgespeicherter Geländedaten, bei dem für ein zu durchfliegendes Geländestück ein Einflugpunkt und ein Ausflugpunkt festgelegt werden und bei dem ein horizontaler Verbindungsweg zwischen Einflugpunkt und Ausflugpunkt festgelegt wird, der in im wesentlichen lineare Flugwegsegmente unterteilt wird und bei dem für jedes der Flugwegsegmente eine vertikale Flughöhenveränderung durch Auswertung der digitalen Geländedaten automatisch ermittelt wird.

Ein derartiges Verfahren wird insbesondere verwendet, um eine Entdeckung eines Flugzeuges durch Radar, elektro-optische Sensoren oder sonstige visuelle Erfassung zu verhindern. Durch eine Anpassung des Flugweges an eine jeweilige Geländeprofilierung wird die Geländedeckung als Sichtschutz genutzt.

Die Planung des entsprechenden Tieffluges wird nach dem Stand der Technik vor einem Beginn des Fluges am Boden durchgeführt. Verbreitet ist insbesondere eine manuelle Generierung des Flugweges aufgrund von geographischen Karten, ebenfalls ist eine halbautomatische manuelle Flugwegplanung möglich, bei der erforderliche Höhendaten einer Datenbank entnommen werden, die ein digitales Geländemodell enthält.

Ansatzweise vorhandene Verfahren zur automatischen Planung von Flugprofilen, die eine Anpassung an eine jeweilige Geländeprofilierung erlauben, sind in der Regel aufwendig und von einem Benutzer schwer nachvollziehbar, so daß bei Luftfahrzeugen Akzeptanzprobleme bei der Besatzung vorliegen.

Aus der DE 29 07 549 A1 ist es bereits bekannt, die Flughöhe eines Flugzeuges automatisch zu ermitteln. Ein zu durchfliegendes geographisches Gebiet wird hierzu in ein festes Rastermaß unterteilt und es werden hierdurch quadratische Gebietssegmente definiert. Für jedes der Gebietssegmente wird eine maximale Geländehöhe bestimmt und digital abgespeichert. Ein horizontaler Flugweg wird zunächst unabhängig von den digitalen Höhendaten durch das zu durchfliegende Gebiet hindurchgelegt und für diesen horizontalen Flugweg wird eine Mindestflughöhe aus den jeweiligen digitalen Höhendaten bestimmt. Bei einem Einsatz dieses Verfahrens als Steuerungsverfahren liegt eine kontinuierliche Arbeitsweise vor und die Verfahrensdurchführung erfolgt in Abhängigkeit von einer aktuellen Flugzeugposition und einer aktuellen Flugrichtung.

Die DE 36 04 401 A1 beschreibt ein weiteres Verfahren zur automatischen Kursbestimmung unter Tiefflugbedingungen. Die Flughöhenfestlegung erfolgt mit Hilfe eines Geländespeichers, in dem ein digitales Geländehöhenmodell in Form rasterartig verteilter Geländepunkte mit zugeordneten Höhenkoordinaten abgespeichert ist. In Abhängigkeit von einer aktuellen Flugposition und einer aktuellen Flugrichtung werden zur aktuellen Flugposition benachbarte Geländebereiche bezüglich ihrer Höhenkoordinaten überprüft und ein Flugweg mit niedrigst möglicher Flughöhe bestimmt. Es erfolgt somit zu jedem Zeitpunkt eine kombinierte Festlegung von horizontaler Flugrichtung und vertikaler Flughöhe. Zur Gewährleistung eines Erreichens eines Zielpunktes ist bei der Festlegung der Flugrichtung eine maximale Richtungsabweichung von einer direkten Flugrichtung einzuhalten.

Aufgabe der vorliegenden Erfindung ist es daher, ein Verfahren der einleitend genannten Art derart zu verbessern, daß eine systematische und nachvollziehbare Flugweggenerierung durchgeführt wird, die eine optimale Anpassung des Weges an vorliegende Geländekonturen ermöglicht.

Diese Aufgabe wird erfindungsgemäß dadurch gelöst, daß der horizontale Verbindungsweg durch Auswertung von Höhenlinien der digitalen Geländedaten derart ermittelt wird, daß sich ein horizontaler Flugweg auf einer für alle Flugwegsegmente gemeinsamen niedrigsten horizontalen Ebene ergibt, daß die Flugwegsegmente mit vorgebbarer gekrümmter Überleitung ineinander einmünden und daß vor der vertikalen Flughöhenermittlung für jedes der Flugwegsegmente das jeweilige Elevationsmaxium bestimmt wird und bei der Festlegung der horizontalen Flugwegsegmente vorgebbare Wegpunkte berücksichtigt werden.

Durch die Trennung bzw. Entkopplung von horizontaler und vertikaler Flugwegplanung wird ein einfaches Planungsprinzip bereitgestellt. Dies ermöglicht unter anderem eine Flugwegplanung bzw. eine Modifikation eines vorgegebenen Flugweges an Bord eines Luftfahrzeuges während einer Mission. Die Segmentierung des Flugweges gewährleistet eine einfache Nachvollziehbarkeit der durchgeführten Optimierungsverfahren. Eine Navigation ist unabhängig von der Art des jeweils vorgesehenen Navigationssystems möglich.

Durch die Entkopplung von horizontaler und vertikaler Flugwegplanung wird eine Geländeabdeckung von bis zu 70 % durch horizontale Manöver und bis zu ca. 30 % durch vertikale Manöver erreicht. Insbesondere ist somit beim Ausfall von Systemkomponenten, die entweder der horizontalen oder der vertikalen Weganpassung zugeordnet sind, die Gewährleistung einer teilweisen Geländeabdeckung möglich.

Zur Ermöglichung eines Umfliegens von Hindernissen mit geringem Abstand wird vorgeschlagen, daß die gekrümmten Überleitungen der Flugwegsegmente als Flugwegkrümmungen mit einem minimalen Kurvenradius eines jeweiligen Luftfahrzeuges vorgegeben werden.

Eine Adaption einer theoretisch vorgebbaren Höhenprofilierung des Flugweges an technische Randbedingungen erfolgt dadurch, daß die vertikale Flugwegprofilierung unter Berücksichtigung maximaler Sink- und Steigleistungen des jeweiligen Luftfahrzeuges durchgeführt wird.

Eine systematische Generierung des dreidimensionalen Flugweges in einem ersten Schritt erfolgt dadurch, daß vor der Durchführung der vertikalen Flugwegprofilierung der horizontale Flugweg auf der niedrigst möglichen Ebene als kürzeste Verbindung des Einflugpunktes mit dem Ausflugpunkt bestimmt wird.

Eine verbesserte Höhenprofilierung kann dadurch bereitgestellt werden, daß zur vertikalen Flugwegoptimierung eine Variation der Geschwindigkeit durchgeführt wird.

Eine weitere Maßnahme zur Beeinflussung der Qualität der Höhenprofilierung besteht darin, daß zur vertikalen Flugwegoptimierung eine Variation der Vertikalgeschwindigkeit durchgeführt wird.

Zur Begrenzung durchzuführender Flugmanöver auf eine für einen Bediener des Flugzeuges nachvollziehbare Anzahl wird vorgeschlagen, daß eine Auswertung der digital abgespeicherten Geländeprofilierung unter Berücksichtigung von Höhendifferenzschwellwerten erfolgt, bei deren Überschreiten jeweils eine Erhöhung bzw. eine Erniedrigung einer Zielflughöhe erfolgt.

Eine weitere Reduzierung von erforderlichen Flugmanövern wird dadurch unterstützt, daß eine Auswertung der digital abgespeicherten Geländeprofilierung unter Berücksichtigung von Höhendifferenzschwellwerten erfolgt, bei deren Überschreiten jeweils eine Veränderung einer Zielflugrichtung erfolgt.

Eine Adaption der Flugwegbestimmung an tatsächlich vorliegende Änderungsraten der ausgewerteten Höhenlinien erfolgt dadurch, daß Wegpunkte zur Definition des Flugweges nichtäquidistant gewählt werden.

Eine weitere Steigerung der Qualität der Höhenprofilierung des Flugweges wird dadurch ermöglicht, daß innerhalb der von Wegpunkten begrenzten Flugwegsegmente Zusatzwegpunkte auf einer jeweiligen maximalen Höhe einer Geländeprofilierung innerhalb des jeweiligen Flugwegsegmentes vorgegeben werden.

Zur Ermöglichung einer Tolerierung von Ungenauigkeiten bei der Steuerung des Flugobjektes sowie zur Ermöglichung einer Reaktion auf Störgrößen wird vorgeschlagen, daß der Flugweg innerhalb eines hindernisfreien Flugkorridors mit vorgebbarer Korridorbreite bestimmt wird.

In der Zeichnung sind Ausführungsbeispiele der Erfindung schematisch dargestellt. Es zeigen:
- Fig. 1:: eine Skizze zur Veranschaulichung der Durchführung horizontaler Geländeschnitte,
- Fig. 2:: eine Weiterführung der Geländeschnitte gemäß Fig. 1,
- Fig. 3a:: eine Bestimmung eines Paßüberganges, der einer maximalen zu berücksichtigenden Geländehöhe entspricht,
- Fig. 3b:: manuelle Vorgabe weiterer Wegpunkte gemäß Fig. 3a,
- Fig. 3c:: Bestimmung weiterer Pässe gemäß Fig. 3a,
- Fig. 4:: eine Skizze zur Veranschaulichung der Aufteilung des horizontalen Flugweges in Flugwegsegmente,
- Fig. 5:: eine Möglichkeit zur vertikalen Flugwegplanung,
- Fig. 6:: eine Vorgabe des vertikalen Flugweges unter Berücksichtigung von Steig- und Sinkleistung des Flugzeuges
**und**
- Fig. 7:: eine andere Variante zur Durchführung der vertikalen Flugwegplanung.

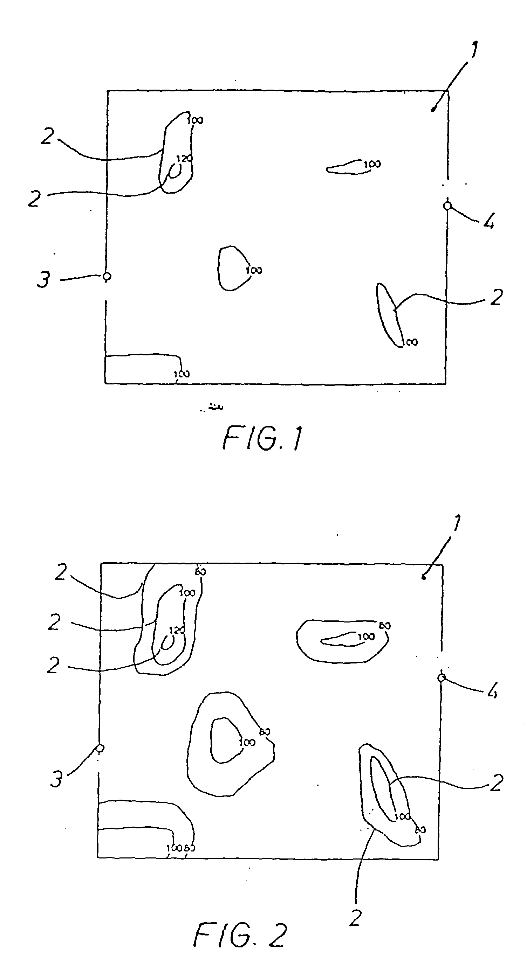

In Fig. 1 ist ein Geländebereich (1) dargestellt, der mit Höhenlinien (2) versehen ist. Ein vorzugebender Flugweg soll zwischen einem Einflugpunkt (3) und einem Ausflugpunkt (4) liegen. Fig. 2 zeigt den Geländebereich (1) gemäß Fig. 1 mit zusätzlichen Höhenlinien (2), die einem niedrigeren Höhenniveau entsprechen.

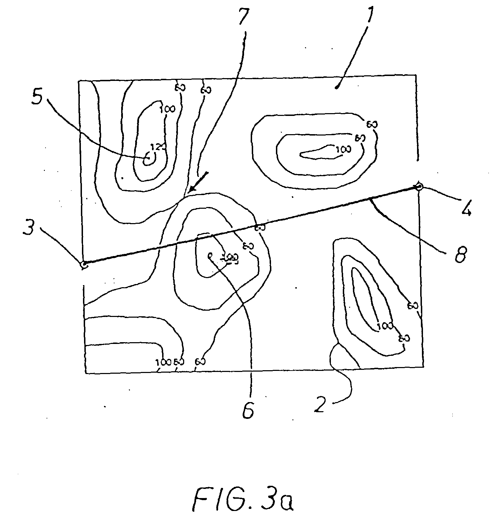

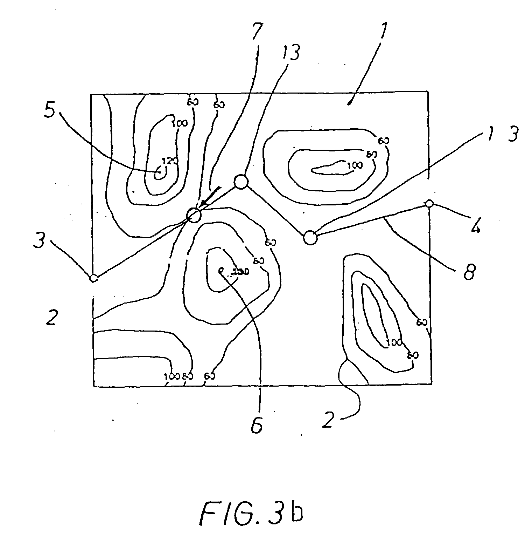

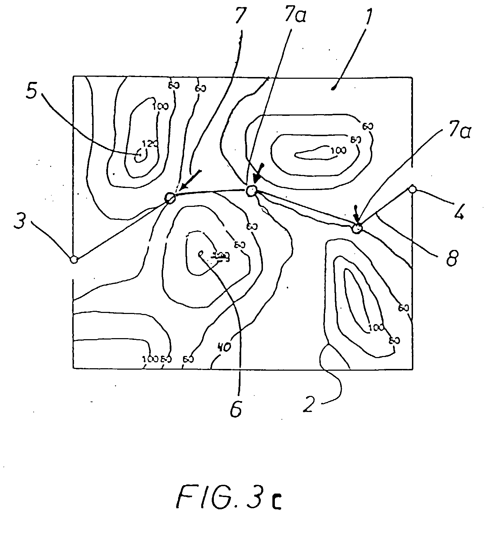

In Fig. 3 wurde die Bestimmung der Höhenlinien (2) solange durchgeführt, bis benachbarte Geländeerhöhungen (5,6) mit Höhenlinien (2) gleichen Niveaus gegeneinander grenzen. Hierdurch wird ein Paß (7) ermittelt, der einer niedrigsten Höhenlinie (2) bei einer Verbindung der Geländeerhebungen (5,6) miteinander entspricht. In Fig. 3a ist zusätzlich ein Flugweg (8) eingezeichnet, der als Ausgangssituation einer kürzesten Verbindung zwischen dem Einflugpunkt (3) und dem Ausflugpunkt (4) auf einer einheitlichen Flughöhe entspricht, die derart gewählt wurde, daß ein vertikaler Sicherheitsabstand zur höchsten innerhalb dieses Flugweges (8) liegenden Höhenlinie (2) besteht. Dieser Flugweg (8) wird durch das Verfahren zur Flugweggenerierung sowohl in horizontaler Richtung als auch in vertikaler Richtung in Abhängigkeit von den jeweils vorliegenden Höhenlinien (2) modifiziert.

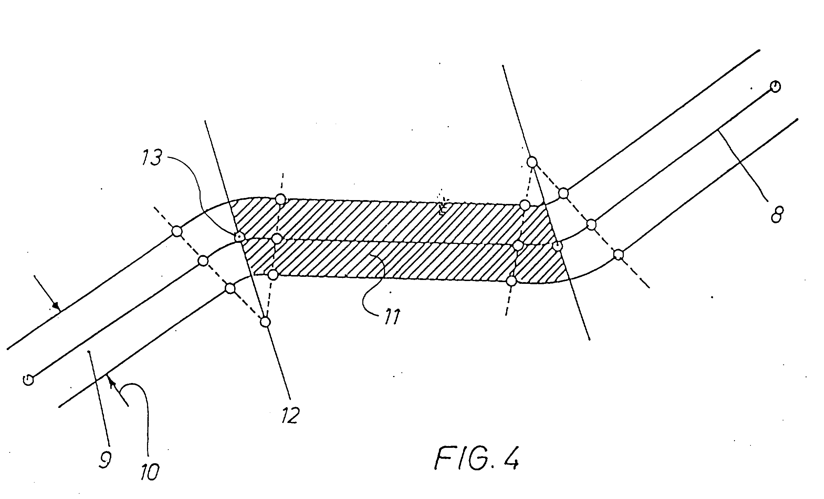

Das Prinzip der horizontalen Flugwegmodifizierung ist in Fig. 4 veranschaulicht. Der Flugweg (8) wird nicht als Linie bestimmt, sondern zum Ausgleich von horizontalen Toleranzen und Ausgleichsbewegungen als Flugkorridor (9), der im wesentlichen symmetrisch zu einem linienförmig gedachten Flugweg (8) verläuft und mit einer Korridorbreite (10) versehen ist.

Die Bestimmung des endgültigen horizontalen Flugweges (8) ergibt sich im Detail aus der nachfolgenden Beschreibung. Zunächst wird entsprechend Fig. 3 eine Bestimmung aller im Geländebereich (1) vorhandener Pässe (7) vorgenommen. Aus dem höchstgelegenen Paß (7) ergibt sich die niedrigste Flugebene. Anschließend wird auf dieser Flugebene der kürzest mögliche Flugweg (8) mit gleichbleibender Flughöhe bestimmt. Anschließend wird dieser Flugweg (8) in Flugwegsegmente (11) unterteilt, die sich jeweils im wesentlichen linear erstrecken und durch Flugwegkrümmungen (12) miteinander verbunden sind. Die Flugwegkrümmungen (12) ergeben sich hierbei aus dem kleinsten vom Luftfahrzeug realisierbaren Kurvenradius. Die Flugwegsegmente (11) erstrecken sich jeweils zwischen Wegpunkten (13) zur optimalen Verfahrensausnutzung in Abhängigkeit von den jeweils vorliegenden Geländegegebenheiten gewählt werden.

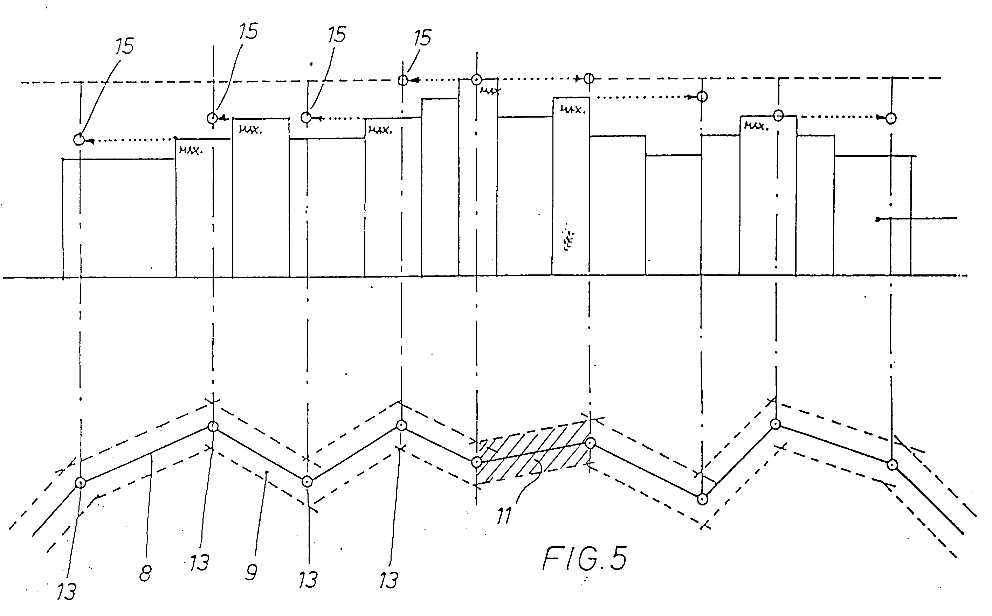

Nachdem derart der horizontale Flugweg (8) vorgegeben ist, kann entsprechend der Verfahrensvariante in Fig. 5 die vertikale Komponente des Flugweges bestimmt werden. Für jedes der Flugwegsegmente (11) wird die niedrigste mögliche konstante Flughöhe in Abhängigkeit von den Höhenlinien (2) bestimmt. In Abhängigkeit von den vom Luftfahrzeug realisierbaren Sink- und Steigleistungen wird überprüft, ob sich vorgegebene Höhenänderungen realisieren lassen. Ergibt sich hierbei, daß sich die zunächst vorgegebene Höhendifferenz nicht realisieren läßt, so erfolgt eine Höhenanpassung an ein technisch erreichbares Höhenniveau.

Die Bestimmung der vertikalen Komponente des Flugweges (8) kann ausgehend vom höchstliegenden Paß (7) erfolgen. Ausgehend von diesem Paß (7) werden die vertikalen Flugwegkomponenten sowohl in Richtung auf den Einflugpunkt (3) als auch auf den Ausflugpunkt (4) bestimmt. Bei der Ermittlung der erreichbaren Sink- und Steigleistungen kann bei einem vereinfachten Verfahren von stationären Steig- und Sinkleistungen bei konstanter Geschwindigkeit ausgegangen werden. Es ist aber ebenfalls möglich, instationäre Steig- und Sinkleistungen bei variablen Geschwindigkeiten zu berücksichtigen.

Hier kann somit bei der Flugwegbestimmung vorgegeben werden, ob beispielsweise eine längere Flugdauer aufgrund von zeitweisen abgesenkten Fluggeschwindigkeiten aufgrund einer hierdurch möglichen Flughöhenvariation auf niedrigerem Niveau günstiger als ein schnellerer Streckendurchlauf mit höherer Erfassungswahrscheinlichkeit ist.

Zur Verdeutlichung ist in Fig. 5 der von den Wegpunkten (13) definierte Flugweg (8) mit zugehörigen Flugkorridoren (9) eingezeichnet. Korrespondierend dazu im oberen Zeichnungsteil sind einerseits blockförmig eine vorliegende Geländeprofilierung (14) und andererseits kreisförmig eingezeichnet in vertikaler Richtung vertikale Wegpunkte (15) dargestellt, die relativ zur Geländeprofilierung (14) unter Berücksichtigung maximaler Sink- und Steigleistungen bestimmt wurden.

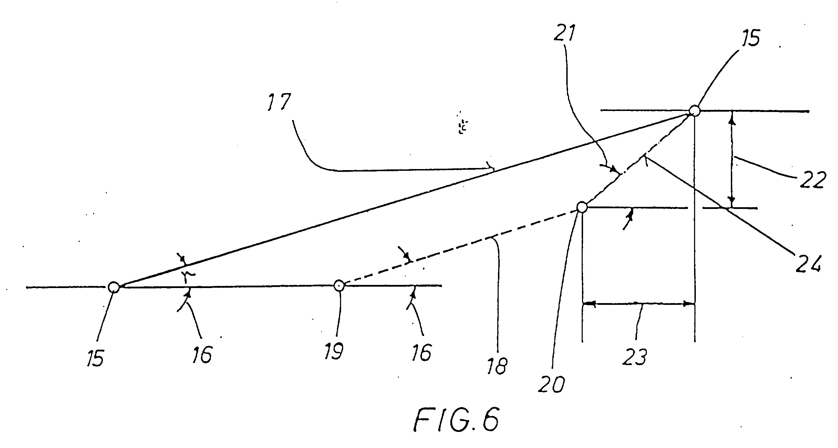

Fig. 6 zeigt die Berücksichtigung einer realisierbaren Steigleistung zwischen zwei vertikalen Wegpunkten (15). Ein Steigwinkel (16) ist einem Steigweg (17) mit einer konstanten Fluggeschwindigkeit zugeordnet. Gestrichelt ist ein Steigweg (18) eingezeichnet, der sich durch variable Fluggeschwindigkeiten erzielen läßt. Es ist erkennbar, daß ein Anstieg des Flugobjektes erst ab einem Wegpunkt (19) erfolgen muß und daß ab einem Wegpunkt (20) ein größerer Steigwinkel (21) realisiert ist.

Ab dem Wegpunkt (19) erfolgt zunächst eine Flughöhenänderung mit dem gleichen Steigwinkel (16) wie beim Steigweg (17). Der Steigwinkel (21) stellt hierbei einen Mittelwert der sich durch die Veränderung der Fluggeschwindigkeit kontinuierlich verändernden tatsächlichen Steigwinkel dar. Zur Ermöglichung eines möglichst niedrigen resultierenden Flugweges (8) wird der Wegpunkt (20) derart gelegt, daß eine maximal zulässige Höhendifferenz (22) erreicht wird. Insgesamt ergibt sich hierdurch eine wesentlich intensivere Anschmiegung des tatsächlichen Flugweges (8) an den Geländeverlauf.

Während einer Streckenlänge (23) wird somit zur Erzielung eines relativ zum Steigwinkel (16) größeren Steigwinkels (21) die Geschwindigkeit des Luftfahrzeuges zunächst verringert und anschließend wieder erhöht, um den in Fig. 6 eingezeichneten horizontalen Flugabschnitt einzunehmen. Der Steigweg (18) besteht somit aus einem Bereich mit konstanter Geschwindigkeit und einem Variationsbereich (24) mit sich verändernder Fluggeschwindigkeit.

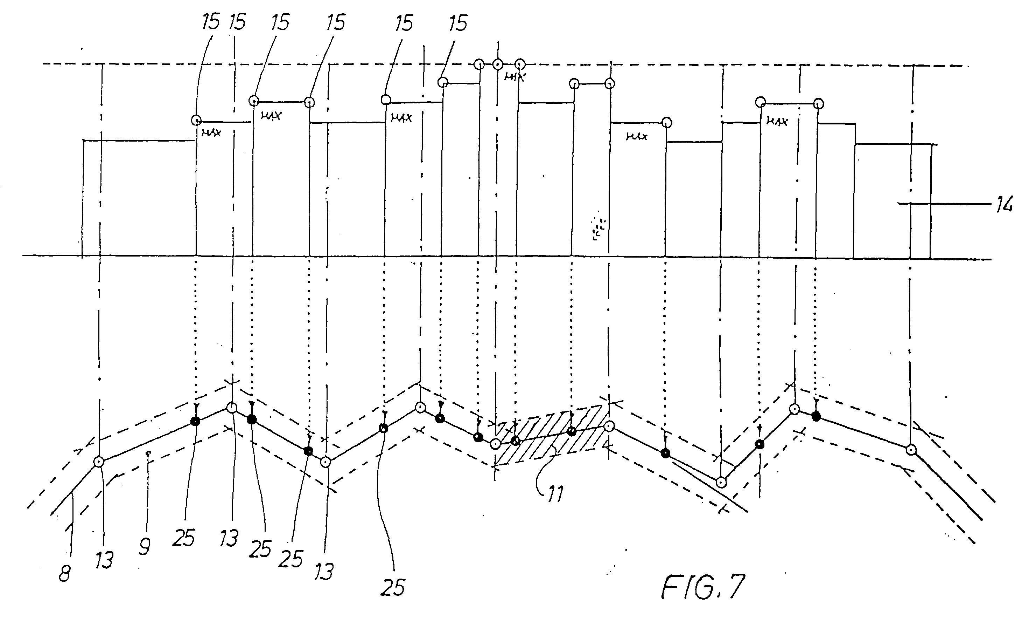

Eine weitere Verfahrensverbesserung kann durch die Bestimmung von Zusatzwegpunkten (25) entsprechend Fig. 7 erreicht werden. In Fig. 7 ist der gleiche horizontale Flugweg (8) wie in Fig. 5 mit dem zugeordneten Flugkorridor (9) eingezeichnet. Ebenfalls sind die gleichen Wegpunkte (13) vorgesehen.

Die Zusatzwegpunkte (25) werden jeweils so gewählt, daß korrespondierende vertikale Wegpunkte (15) innerhalb jeden Flugwegsegmentes (11) auf dem maximalen Geländeelevationswert der Geländeprofilierung (14) angeordnet sind. Eine Berücksichtigung der maximal realisierbaren Steig- und Sinkleistungen erfolgt entsprechend Fig. 5. Es kann so ein dreidimensionales Flugprofil bereitgestellt werden, daß auf Hindernisfreiheit überprüft ist und das die Flugleistung des Flugzeuges berücksichtigt. Durch die Verfahrensvariante gemäß Fig. 7 wird ein Flugprofil bereitgestellt, das noch besser der Geländekontur angepaßt ist.

## Patentansprüche

1. Verfahren zur interaktiven Generierung eines bodennahen Flugweges (8) in Abhängigkeit von einer Geländeprofilierung durch Auswertung digital abgespeicherter Geländedaten, bei dem für ein zu durchfliegendes Geländestück ein Einflugpunkt (3) und ein Ausflugpunkt (4) festgelegt werden und bei dem ein horizontaler Verbindungsweg zwischen Einflugpunkt (3) und Ausflugpunkt (4) festgelegt wird, der in im wesentlichen lineare Flugwegsegmente (11) unterteilt wird und bei dem für jedes der Flugwegsegmente (11) eine vertikale Flughöhenveränderung durch Auswertung der digitalen Geländedaten automatisch ermittelt wird, dadurch gekennzeichnet, daß der horizontale Verbindungsweg durch Auswertung von Höhenlinien (2) der digitalen Geländedaten derart ermittelt wird, daß sich ein horizontaler Flugweg (8) auf einer für alle Flugwegsegmente (11) gemeinsamen niedrigsten horizontalen Ebene ergibt, daß die Flugwegsegmente (11) mit vorgebbarer gekrümmter Überleitung ineinander einmünden und daß vor der vertikalen Flughöhenermittlung für jedes der Flugwegsegmente (11) das jeweilige Elevationsmaxium bestimmt wird und bei der Festlegung der horizontalen Flugwegsegmente (11) vorgebbare Wegpunkte (13) berücksichtigt werden.

2. Verfahren nach Anspruch 1, dadurch gekennzeichnet, daß die gekrümmten Überleitungen der Flugwegsegmente (11) als Flugwegkrümmungen (12) mit einem minimalen Kurvenradius eines jeweiligen Luftfahrzeuges vorgegeben werden.

3. Verfahren nach Anspruch 1 oder 2, dadurch gekennzeichnet, daß die vertikale Flugwegprofilierung unter Berücksichtigung maximaler Sink- und Steigleistungen des jeweiligen Luftfahrzeuges durchgeführt wird.

4. Verfahren nach einem der Ansprüche 1 bis 3, dadurch gekennzeichnet, daß vor der Durchführung der vertikalen Flugwegprofilierung der horizontale Flugweg (8) auf der niedrigst möglichen Ebene als kürzeste Verbindung des Einflugpunktes (3) mit dem Ausflugpunkt (4) bestimmt wird.

5. Verfahren nach einem der Ansprüche 1 bis 4, dadurch gekennzeichnet, daß zur vertikalen Flugwegoptimierung eine Variation der Fluggeschwindigkeit durchgeführt wird.

6. Verfahren nach einem der Ansprüche 1 bis 5, dadurch gekennzeichnet, daß zur vertikalen Flugwegoptimierung eine Variation der Vertikalgeschwindigkeit durchgeführt wird.

7. Verfahren nach einem der Ansprüche 1 bis 6, dadurch gekennzeichnet, daß eine Auswertung der digital abgespeicherten Geländeprofilierung (14) unter Berücksichtigung von Höhendifferenzschwellwerten erfolgt, bei deren Überschreiten jeweils eine Erhöhung bzw. eine Erniedrigung einer Zielflughöhe erfolgt.

8. Verfahren nach einem der Ansprüche 1 bis 7, dadurch gekennzeichnet, daß eine Auswertung der digital abgespeicherten Geländeprofilierung (14) unter Berücksichtigung von Höhendifferenzschwellwerten erfolgt, bei deren Überschreiten jeweils eine Veränderung einer Zielflugrichtung erfolgt.

9. Verfahren nach einem der Ansprüche 1 bis 8, dadurch gekennzeichnet, daß Wegpunkte (13) zur Definition des Flugweges (8) nichtäquidistant gewählt werden.

10. Verfahren nach einem der Ansprüche 1 bis 9, dadurch gekennzeichnet, daß innerhalb der von Wegpunkten (13) begrenzten Flugwegsegmente (11) Zusatzwegpunkte (25) auf einer jeweiligen maximalen Höhe einer Geländeprofilierung (14) innerhalb des jeweiligen Flugwegsegmentes (11) vorgegeben werden.

11. Verfahren nach einem der Ansprüche 1 bis 10, dadurch gekennzeichnet, daß der Flugweg (8) innerhalb eines hindernisfreien Flugkorridors (9) mit vorgebbarer Korridorbreite (10) bestimmt wird.

## Claims

1. Method for the interactive generation of a near-ground flight path (8) as a function of terrain profiling by evaluation of digitally stored terrain data, in which an entry point (3) and an exit point (4) are established for a piece of terrain to be flown through and in which a horizontal connecting path between entry point (3) and exit point (4) is established, which is split into substantially linear flight path segments (11) and in which a vertical change in flight altitude is automatically determined for each of the flight path segments (11) by evaluation of the digital terrain data, characterised in that the horizontal connecting path is determined by evaluating contour lines (2) of the digital terrain data, in that a horizontal flight path (8) is produced at a lowest horizontal plane common to all flight path segments (11), in that the flight path segments (11) merge with a predeterminable curved transition and in that the respective maximum elevation is defined for each of the flight path segments (11) before determining the vertical flight altitude and predeterminable path points (13) are allowed for when establishing horizontal flight path segments (11).

2. Method according to claim 1, characterised in that the curved transitions of the flight path segments (11) are predetermined as curves in the flight path (12) with a minimum curve radius for a respective aircraft.

3. Method according to claim 1 or 2, characterised in that vertical flight path profiling is carried out while allowing for maximum descending and ascending performance of the respective aircraft.

4. Method according to one of claims 1 to 3,
characterised in that before carrying out vertical flight path profiling, the horizontal flight path (8) at the lowest possible plane is defined as the shortest connection between the entry point (3) and the exit point (4).

5. Method according to one of claims 1 to 4,
characterised in that the flight speed is varied for vertical flight path optimisation.

6. Method according to one of claims 1 to 5,
characterised in that the vertical speed is varied for vertical flight path optimisation.

7. Method according to one of claims 1 to 6,
characterised in that the digitally stored terrain profiling (14) is evaluated while allowing for altitude difference thresholds, a target flight altitude being raised or lowered each time they are exceeded.

8. Method according to one of claims 1 to 7,
characterised in that the digitally stored terrain profiling (14) is evaluated while allowing for altitude difference thresholds, a target flight direction being varied each time they are exceeded.

9. Method according to one of claims 1 to 8,
characterised in that path points (13) for defining the flight path (8) are selected non-equidistantly.

10. Method according to one of claims 1 to 9,
characterised in that, within the flight path segments (11) limited by path points (13), additional path points (25) at a respective maximum height of terrain profiling (14) are predetermined within the respective flight path segment (11).

11. Method according to one of claims 1 to 10,
characterised in that the flight path (8) is defined within an obstacle-free flight corridor (9) with a predeterminable corridor width (10).

## Revendications

1. Procédé destiné à la génération interactive d'une trajectoire de vol (8) à proximité du sol en fonction d'un tracé topographique, par exploitation de données topographiques enregistrées sous forme numérique, dans le cas duquel, pour une portion de terrain devant être traversée par l'avion, un point d'entrée (3) et un point de sortie (4) sont fixés et dans le cas duquel une trajectoire horizontale reliant le point d'entrée (3) et le point de sortie (4) est fixée, ladite trajectoire étant divisée en segments de trajectoire de vol (11) sensiblement linéaires, et dans le cas duquel une modification verticale de la hauteur de vol est automatiquement repérée pour chacun des segments de trajectoire de vol (11) par exploitation des données topographiques numériques, caractérisé en ce que la trajectoire de liaison horizontale est repérée par exploitation de courbes de niveau (2) des données topographiques numériques de telle sorte qu'une trajectoire de vol (8) horizontale soit obtenue sur un plan horizontal le plus bas possible commun à tous les segments de trajectoire de vol (11), que les segments de trajectoire de vol (11) débouchent l'un dans l'autre en formant une transition en courbe déterminée et que, avant le repérage vertical de la hauteur de vol, l'élévation maximum soit déterminée pour chacun des segments de trajectoire de vol (11) et que, lors de la détermination des segments de trajectoire de vol (11) horizontaux, il soit tenu compte de points de trajectoire (13) prédéterminés.

2. Procédé suivant la revendication 1, caractérisé en ce que les transitions en courbe des segments de trajectoire de vol (11) sont prévues en tant que virages (12) de rayon minimum de la trajectoire de vol d'un avion respectif.

3. Procédé suivant la revendication 1 ou 2, caractérisé en ce que le tracé vertical de la trajectoire de vol est réalisé en tenant compte des performances maximum en descente et en ascension de chaque avion respectif.

4. Procédé suivant l'une quelconque des revendications 1 à 3, caractérisé en ce que, avant la réalisation du tracé vertical de la trajectoire de vol, la trajectoire de vol horizontale (8) est déterminée sur le plan le plus bas possible comme étant la plus courte liaison entre le point d'entrée (3) et le point de sortie (4).

5. Procédé suivant l'une quelconque des revendications 1 à 4, caractérisé en ce qu'une variation de la vitesse de vol est opérée pour optimiser la trajectoire de vol verticale.

6. Procédé suivant l'une quelconque des revendications 1 à 5, caractérisé en ce qu'une variation de la vitesse d'ascension est opérée pour optimiser la trajectoire de vol verticale.

7. Procédé suivant l'une quelconque des revendications 1 à 6, caractérisé en ce qu'une exploitation du tracé topographique (14) enregistré sous forme numérique est réalisée en tenant compte des valeurs seuil de dénivelés, un dépassement de ces valeurs donnant lieu respectivement à une élevation ou à un abaissement de la hauteur de vol ciblée.

8. Procédé suivant l'une quelconque des revendications 1 à 7, caractérisé en ce qu'une exploitation du tracé topographique (14) enregistré sous forme numérique est réalisée en tenant compte des valeurs seuil de dénivelés, un dépassement de ces valeurs donnant lieu respectivement à une modification de la direction de vol ciblée.

9. Procédé suivant l'une quelconque des revendications 1 à 8, caractérisé en ce que des points de trajectoire (13) destinés à définir la trajectoire de vol (8) sont choisis de manière non équidistante.

10. Procédé suivant l'une quelconque des revendications 1 à 9, caractérisé en ce que, à l'intérieur des segments de trajectoire de vol (11) délimités par des points de trajectoire (13), des points de trajectoire supplémentaires (25) sont prédéterminés à l'intérieur du segment de trajectoire de vol respectif (11) à une hauteur maximale respective d'un tracé topographique (14).

11. Procédé suivant l'une quelconque des revendications 1 à 10, caractérisé en ce que la trajectoire de vol (8) est déterminée à l'intérieur d'un couloir aérien (9) dépourvu d'obstacles présentant une largeur de couloir (10) prédéterminée.
